# EUROPEAN PATENT SPECIFICATION

(11) **EP 4 542 300 B1**
(45) Date of publication and mention of the grant of the patent: **01.04.2026**
(21) Application number: 24206487.1
(22) Date of filing: 14.10.2024
(51) Int. Cl.: G03B 21/14, F16M 13/02, G03B 21/54, F16M 11/18, F16M 11/10

(54) **PROJECTOR ADJUSTMENT SYSTEM**
PROJEKTOREINSTELLSYSTEM
SYSTÈME DE RÉGLAGE DE PROJECTEUR

(30) Priority: 18.10.2023 IT 202300021726
(43) Date of publication of application: 23.04.2025
(73) Proprietor: EUROMET S.R.L., 60025 Loreto (IT)
(72) Inventor: STACCHIOTTI, Franco, 62010 Montefano (MC) (IT); SCONOCCHINI, Marco, 62010 Montefano (MC) (IT)
(74) Representative: Baldi, Claudio

(56) References cited:
- US-A1- 2008 179 475
- US-A1- 2015 198 868
- US-A1- 2018 136 547

## Description

The present invention relates to a projector adjustment system.

As it is known, a projector is generally supported by a structure, which may be, for example, a vertical wall, a ceiling, or a base arranged on the ground.

Various types of support systems for attaching a projector to a structure are known, and various types of adjustment systems for adjusting the position of the projector are also known. Document US2018/126547 discloses a projector mount with controls enabling quick selection between course alignment of the projector by hand about any of three positioning axes (pitch, yaw, and roll) and precision adjustment of projector position about any one or more of the axes, once the course alignment has been completed.

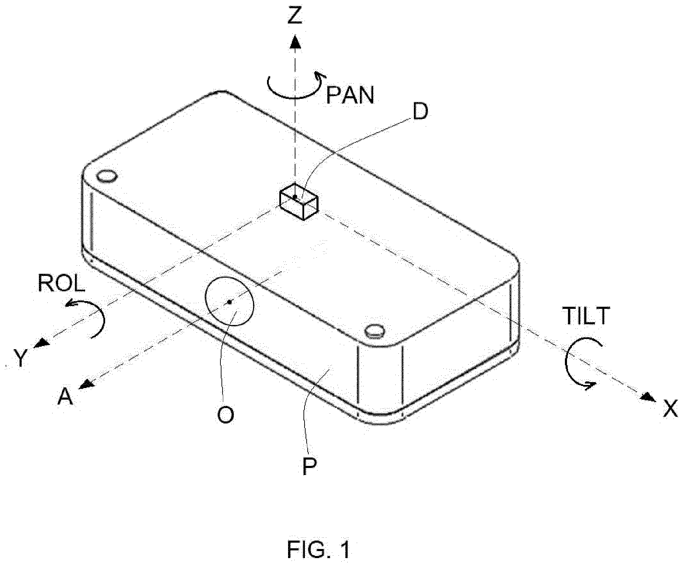

Fig. 1 illustrates a projector (P) having a lens (O) for image projection. The lens (O) has an axis (A). An adjustment system (D) is provided on the projector (P).

A set of three Cartesian axes (X, Y, Z) is considered in the adjustment system (D), wherein the Y axis is a horizontal axis parallel to the axis (A) of the lens of the projector, the Z axis is a vertical axis, and the X axis is a horizontal axis orthogonal to the Y and Z axes.

The adjustment system (D) should provide three types of adjustments:
- roll adjustment (ROL) by rotating the projector around the Y axis, which is hereinafter defined as ROL axis,
- tilt adjustment (TILT) by rotating the projector around the X axis, which is hereinafter defined as TILT axis, and
- pan adjustment (PAN) by rotating the projector around the Z axis, which is hereinafter defined as PAN axis.

However, the adjustment systems of the prior art are impaired by some drawbacks. In fact, such adjustment systems of the prior art are inaccurate, very cumbersome, unintuitive and difficult to use.

The purpose of the present invention is to eliminate the drawbacks of the prior art by providing a projector adjustment system that is efficient, accurate and reliable.

Another purpose of the present invention is to provide such a projector adjustment system that is compact and space-saving.

Still another purpose of the present invention is to provide such a projector adjustment system that is intuitive and easy to use.

These purposes are achieved in accordance with the invention with and features of the appended independent claim 1.

Advantageous achievements of the invention appear from the dependent claims.

Further features of the invention will appear clearer from the following detailed description, which refers to a purely illustrative and therefore non-limiting embodiment, as illustrated in the appended drawings, wherein:
Fig. 1 is a perspective view of a projector with three Cartesian axes for a TILT, ROL and PAN adjustment of the projector;
Fig. 2 is a perspective view of the adjustment system according to the invention and an exploded view of a projector, a projector attachment plate and two cover plates;
Fig. 2A is a detail of Fig. 2, illustrating a plate assembly of the adjustment system;
Fig. 3 is a perspective view of the parts of Fig. 2 in assembled condition;
Fig. 3A is an enlargement of a detail of Fig. 3;
Fig. 4 is an exploded perspective view of the parts of the adjustment assembly of the system according to the invention;
Fig. 4A is an enlarged detail of Fig. 4, illustrating the pan adjustment system;
Fig. 4B is an enlarged detail of Fig. 4, illustrating the roll and tilt adjustment system; and
Fig. 5 is a perspective view illustrating the adjustment assembly in assembled condition; and
Fig. 6 is a top view of the adjustment assembly.

With the aid of the Figures, the projector adjustment system according to the invention is described, which is comprehensively denoted with reference numeral 100.

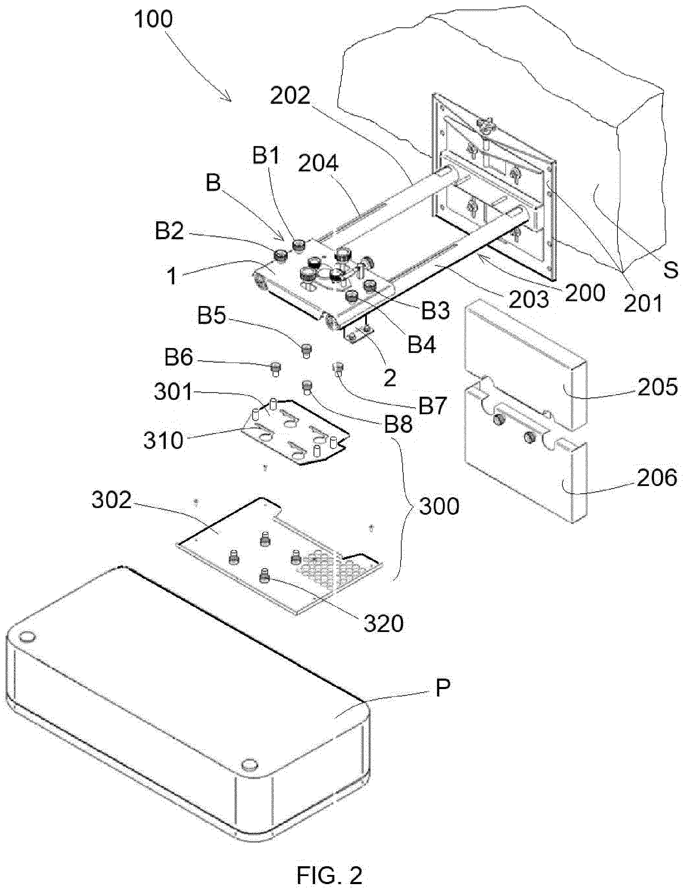

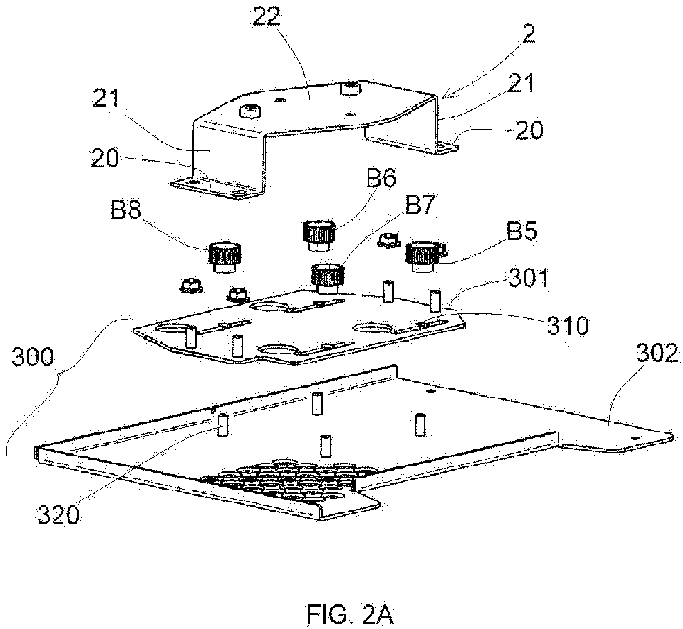

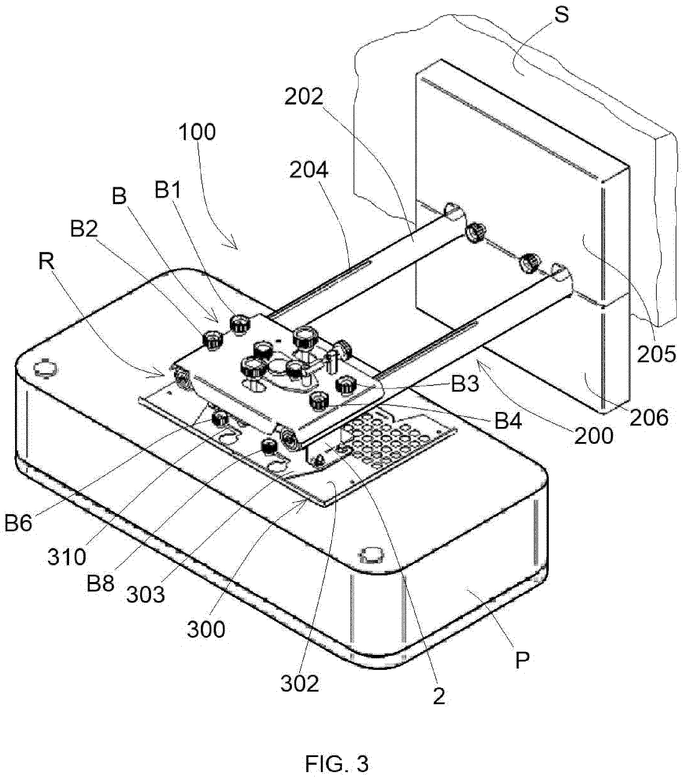

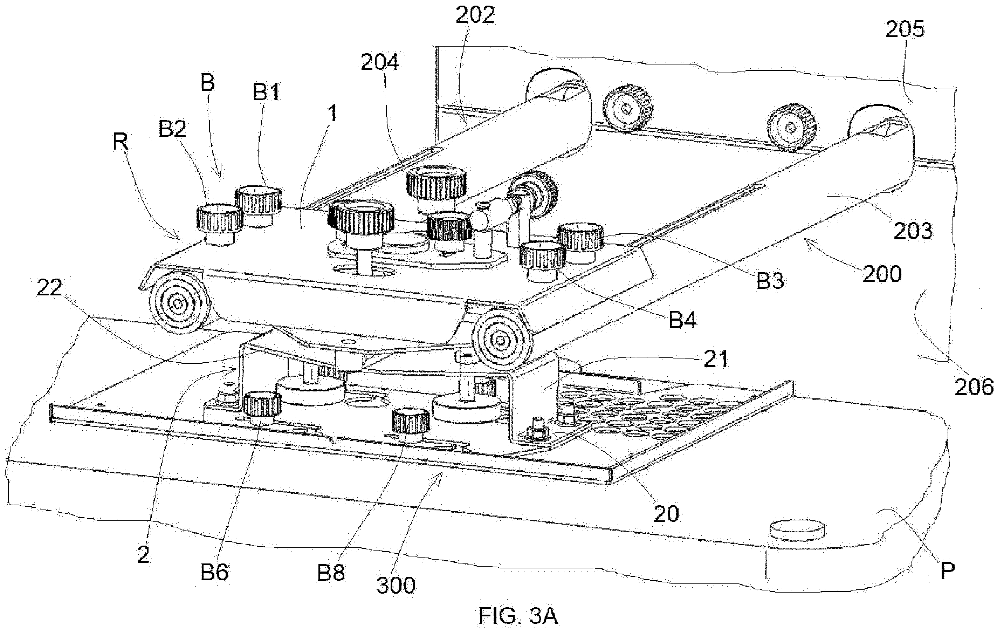

With reference to Figs. 2, 2A, 3 and 3A, the adjustment system (100) comprises:
- a support assembly (200) suitable for being attached to a structure (S), and
- an adjustment assembly (R) connected to the support assembly (200) and suitable for being attached to a projector (P).

The support assembly (200) comprises a fixing plate (201) suitable for being fixed to the structure (S) and a bracket assembly (202) that protrudes from the fixing plate (201). The bracket assembly (202) may comprise two tubes or bars (203) provided with a guiding groove (204) to enable a sliding of the adjustment assembly (R) on the bracket assembly (202), in the direction of the roll axis (Y), so as to adjust the distance of the projector (P) from the structure (S).

In the case where the structure (S) is a vertical wall, the bracket assembly (202) has a rectilinear shape and protrudes from the fixing plate (201) along a horizontal plane.

On the contrary, in the case where the structure (S) is a horizontal wall, the bracket assembly (202) may have an L-shaped structure so that a portion of the bracket assembly suitable for accommodating the adjustment assembly is arranged in a horizontal plane.

A pair of cover plates (205, 206) cover the fixing plate (201) after attaching the fixing plate to the structure (S).

The adjustment assembly (R) comprises an upper plate (1) suitable for being attached to the support assembly (200), and a lower plate (2) suitable for being attached to the projector (P).

The upper plate (1) of the adjustment assembly is slidably mounted on the bracket assembly (202) to adjust the distance of the projector (P) from the structure (S).

Locking means (B) lock the upper plate (1) of the adjustment assembly in position on the bracket assembly (202) of the support assembly. The locking means (B) comprise a first pair of locking knobs (B1, B2) and a second pair of locking knobs (B3, B4) mounted above the upper plate (1) of the adjustment assembly, respectively near opposite sides of the upper plate, to lock the upper plate in position.

The locking knobs (B1, B2, B3, B4) have respective threaded stems that pass through the upper plate (1) of the adjustment assembly and engage in the guiding grooves (204) of the tubes of the bracket assembly.

The lower plate (2) of the adjustment assembly has the shape of a bridge or omega bracket. The lower plate (2) comprises two feet (20), two side walls (21) that rise from the feet and an upper wall (22) that is joined with the two side walls (20).

The lower plate (2) of the adjustment assembly may be attached directly or indirectly to the projector (P).

Referring to Fig. 2A, advantageously, the adjustment system (100) also comprises a plate assembly (300) for attaching the lower plate (2) of the adjustment assembly to the projector (P).

The plate assembly (300) comprises an adjustment plate (301) and a support plate (302). The adjustment plate (301) is attached to the lower plate (2) of the adjustment assembly. The support plate (302) is suitable for being attached to the projector (P).

The adjustment plate (301) has a plurality of slots (310), e.g., four slots (310) extending in a direction orthogonal to the guiding grooves (204) of the bracket assembly of the support assembly.

Locking knobs (B5, B6, B7, B8) are mounted above the adjustment plate (301). The locking knobs (B5, B6, B7, B8) have stems that pass through the slots (310) of the adjustment plate (301) and are engaged in tangs (320) of the support plate. The stems of the locking knobs (B5, B6, B7, B8) slide through the slots (310) of the adjustment plate so that the projector (P) can be moved in the direction of the tilt axis (X) and centered with respect to the adjustment system (100).

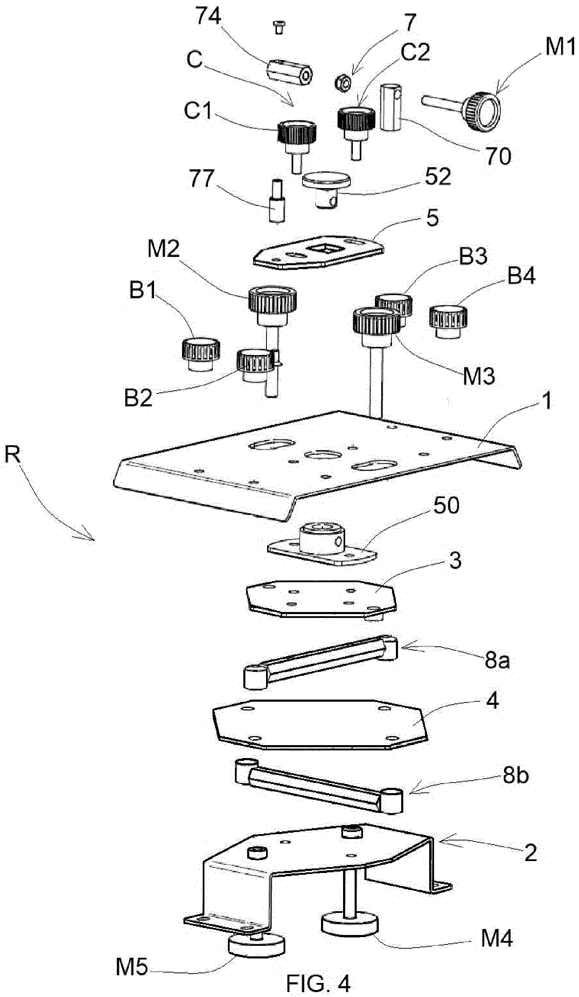

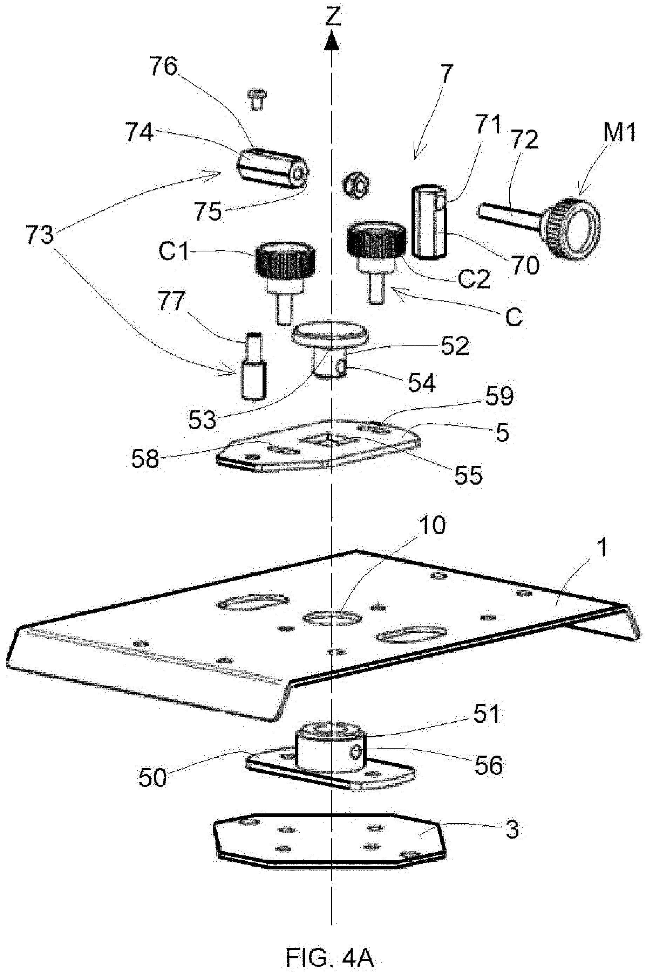

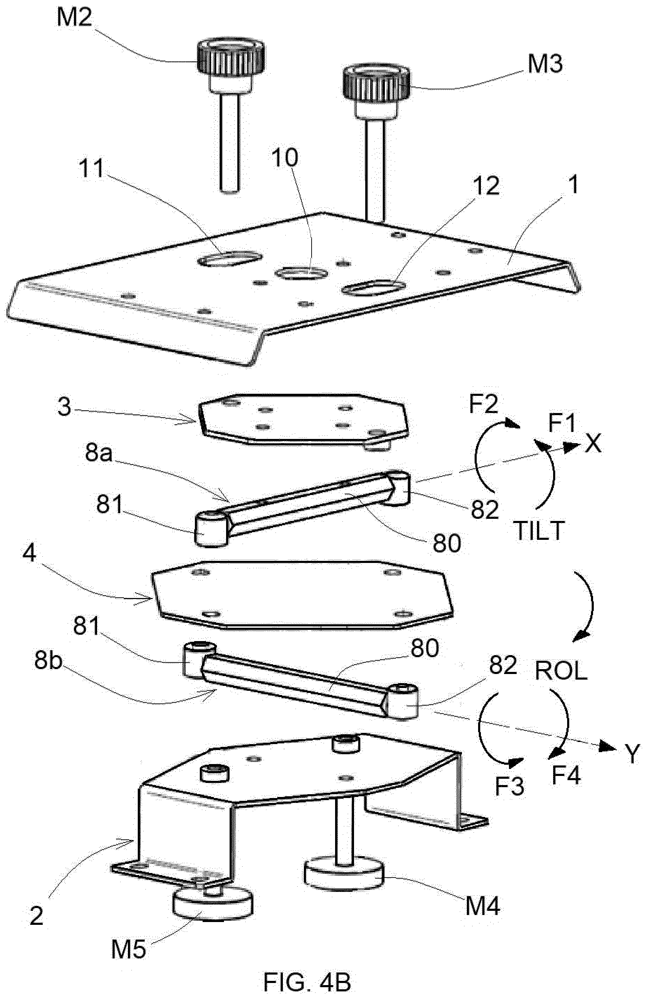

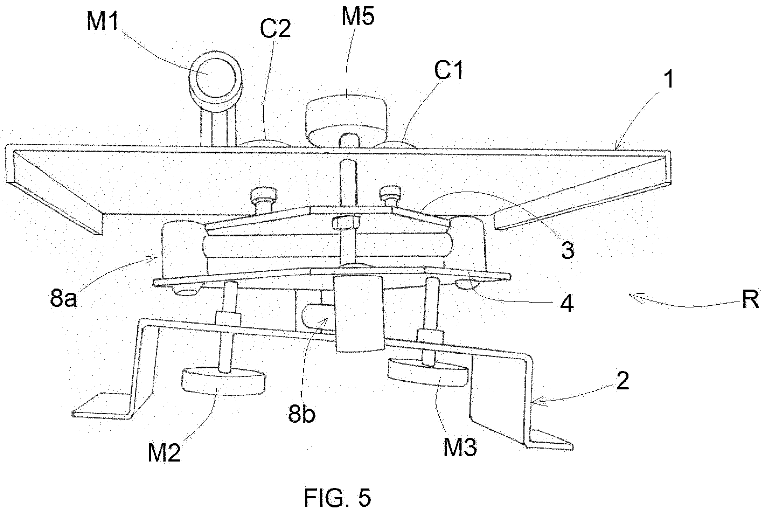

Referring to Figs. 4, 4A, 4B and 5, the adjustment assembly (R) comprises:
- a first movable plate (3) mounted under the upper plate (1) and movable with respect to the upper plate (1); and
- a second movable plate (4) mounted between the lower plate (2) and the first movable plate (3) and movable with respect to both the lower plate (2) and the first movable plate (3).

With reference to Fig. 4A, the first movable plate (3) is rotatably mounted with respect to the upper plate (1), in such a way to rotate around the vertical pan axis (Z) to adjust the pan of the projector.

For such a purpose, the first movable plate (3) is connected to the upper plate (1) by means of a flange (5) arranged above the upper plate and a counter-flange (50) arranged under the upper plate and attached to the first movable plate (3). The counter-flange (50) has a tang (51). A locking pin (52) passes through the flange (5) and the upper plate (1) and is locked into the tang (51) of the counter-flange. The upper plate (1) has a central hole (10) wherein the locking pin (52) is rotatably arranged.

The locking pin (52) has anti-rotation means (53, 54) to prevent a rotation relative to the flange (5) and to the counter flange (50). The anti-rotation means of the locking pin comprise a prismatic portion (53) that is engaged in a prismatic hole (55) of the flange and a radial pin (54) that is engaged in a radial hole (56) of the shank of the counter-flange.

A pan adjustment knob (M1) is mounted above the upper plate (1) to adjust a rotation of the first movable plate (3) around the vertical pan axis (Z). The pan adjustment knob (M1) operates a pan adjustment mechanism (7) that rotates the first movable plate (3).

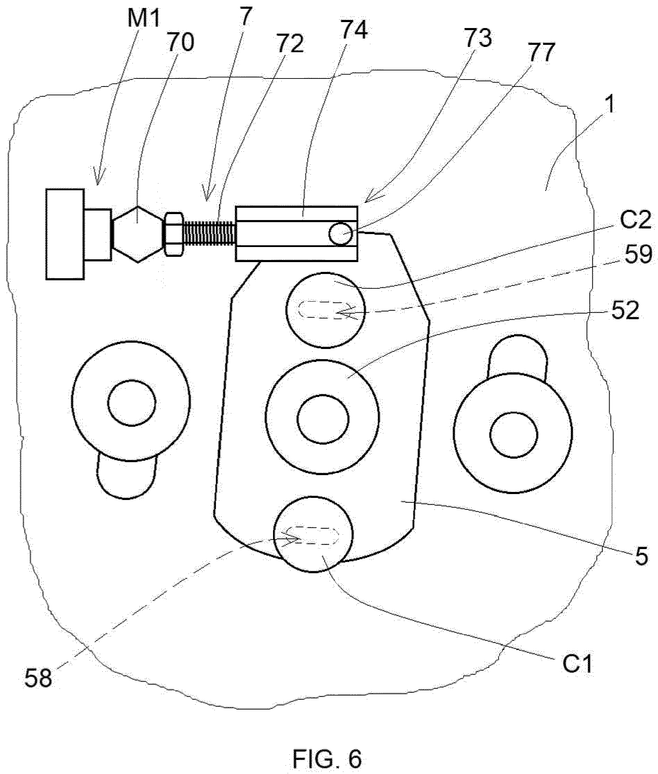

Referring to Figs. 4A and 6, the pan adjustment mechanism (7) comprises a support (70) mounted on the upper plate (1). The support (70) has a threaded hole (71) with horizontal axis, wherein a stem (72) of the pan adjustment knob (M1) is screwed. The stem (72) of the pan adjustment knob (M1) operates the driving means (73) connected to the flange (5) in order to rotate the flange (5).

The driving means (73) comprise a bushing (74) having an axial bore (75) with horizontal axis, wherein the stem (72) of the first adjustment knob is engaged, and a radial hole (76) wherein a pin (77) with vertical axis that is peripherally connected to the flange (5) is engaged. The pin (77) is connected to a peripheral hole (57) of the flange (5).

In view of the above, a screwing or unscrewing of the pan adjustment knob (M1) causes a translation of the driving means (73) and a rotation of the flange (5) around the vertical pan axis (Z). Since the flange (5) is integrally connected to the first movable plate (3) and the first movable plate (3) is connected to the second movable plate, which is connected to the lower plate (2), a rotation of the pan adjustment knob (M1) causes a rotation around the vertical pan axis (Z) of the lower plate (2) connected to the projector in order to adjust the pan.

Rotation locking means (C) lock the first movable plate (3) in position after adjusting the pan. The rotation locking means (C) comprise a pair of knobs (C1, C2) mounted on the flange (5) to lock the flange (5) to the upper plate (1). The flange (5) has slots (59, 58) wherein the stems of the knobs (C1, C2) of the rotation locking means are engaged.

Referring to Fig. 4B, the first movable plate (3) is connected to the second movable plate (4) by means of a first joint (8a) that enables a relative rotation of the second movable plate (4) relative to the first movable plate (3) around a horizontal tilt axis (X).

The second movable plate (4) is connected to the lower plate (2) by means of a second joint (8b) that enables a relative rotation of the second movable plate (4) with respect to the lower plate (2) around a horizontal roll axis (Y) that is orthogonal to the tilt axis (X), but vertically spaced with respect to the tilt axis (X). Otherwise said, the roll axis (Y) is at a lower height than the tilt axis (X).

The first joint (8a) is the same as the second joint (8b). Each joint (8a, 8b) comprises a central body (80) and two tangs (81, 82) arranged at the ends of the central body and rotatable with respect to the central body.

The central body (80) of the first joint has the shape of a rod having an axis coincident with the tilt axis (X). The central body (80) of the second joint has the shape of a rod having an axis coincident with the roll axis (Y). The tangs (81, 82) rotate around the axis of the central body (80).

The central body (80) of the first joint (8a) is attached to the first movable plate (3) and the tangs (81, 82) of the first joint (8a) are attached to the second movable plate (4).

The central body (80) of the second joint (8b) is attached to the lower plate (2), and the tangs (81, 82) of the second joint (8b) are attached to the second movable plate (4).

The central body (80) of the first joint (8a) is disposed above the second movable plate (4) according to a first diagonal of the second movable plate. The central body (80) of the second joint (8b) is disp0osed under the second movable plate (4) according to a second diagonal of the second movable plate.

A first tilt adjustment knob (M2) and a second tilt adjustment knob (M3) are arranged above the upper plate (1) to adjust the tilt movement of the projector. The tilt adjustment knobs (M2, M3) have stems that pass through the upper plate (1) and push the second movable plate (4) on either side relative to the central body (80) of the first joint (8a).

The straight line joining the stems of the tilt adjustment knobs (M2, M3) is orthogonal to the tilt axis (X). Thus, a screwing of the first tilt adjustment knob (M2) causes a rotation of the second movable plate (4) around the tilt axis (X) in the direction of arrow F1. On the contrary, a screwing of the second tilt adjustment knob (M3) causes a rotation of the second movable plate (4) around the tilt axis (X) in the direction of arrow F2.

It should be considered that the assembly comprising the second movable plate (4) and the lower plate (2) is integral during a rotation around the tilt axis (X). Therefore, the lower plate (2) rotates around the tilt axis (X) jointly with the second movable plate (4).

The tilt adjustment knobs (M2, M3) are configured so as to adjust the tilt of the projector by + 10°.

The tilt adjustment knobs (M2, M3) pass through slots (11, 12) of the upper plate (1) to enable a rotation of the assembly comprising the first movable plate (3) and the second movable plate (4) relative to the upper plate (1) when the pan is adjusted.

A first roll adjustment knob (M4) and a second roll adjustment knob (M5) are disposed under the lower plate (2) to adjust the roll movement of the projector. The roll adjustment knobs (M4, M5) have stems that pass through the lower plate (2) and push the second movable plate (4) on either side relative to of the central body (80) of the second joint (8b).

The straight line joining the stems of the roll adjustment knobs (M4, M5) is orthogonal to the roll axis (Y). Thus, a screwing of the first roll adjustment knob (M4) causes a rotation of the lower plate (2) around the roll axis (Y) in the direction of arrow F3. On the contrary, a screwing of the second roll adjustment knob (M5) causes a rotation of the lower plate (2) around the roll axis (Y) in the direction of arrow F4.

The roll adjustment knobs (M4, M5) are configured to adjust the projector's ROL by ±10°.

Due to the provision of the movable plates (3, 4) and of the joints (8a, 8b), the adjustment assembly (R) occupies a small space and ensures maximum precision of movement.

Equivalent variations and modifications may be made to the present embodiment of the invention, within the reach of a person skilled in the art, but still within the scope of the invention as expressed by the appended claims.

## Claims

1. Adjustment system (100) for a projector comprising:
- a support assembly (200) suitable for being attached to a structure (S), and
- an adjustment assembly (R) connected to the support assembly (200) and suitable for being attached to a projector (P);
said adjustment assembly (R) comprising:
- an upper plate (1) suitable for being attached to the support assembly (200),
- a lower plate (2) suitable for being attached to the projector (P),
- a first movable plate (3) mounted under the upper plate (1) and movable with respect to the upper plate (1); wherein the first movable plate (3) is rotatably mounted with respect to the upper plate (1) so as to rotate around a vertical pan axis (Z) to adjust the pan of the projector,
- a second movable plate (4) mounted between the lower plate (2) and the first movable plate (3) and movable with respect to both the lower plate (2) and the first movable plate (3),
- a pan adjustment knob (M1) mounted above the upper plate (1) to adjust a rotation of the first movable plate (3) around the vertical pan axis (Z),
- a first joint (8a) connecting the first movable plate (3) to the second movable plate (4) so as to allow a relative rotation of the second movable plate (4) relative to the first movable plate (3) around a horizontal tilt axis (X),
- a first tilt adjustment knob (M2) and a second tilt adjustment knob (M3) arranged above the upper plate (1) and provided with stems passing through the upper plate (1) and pushing the second movable plate (4) on either side relative to the first joint (8a) so as to adjust a rotation of the second movable plate (4) around the horizontal tilt axis (X),
- a second joint (8b) connecting the second movable plate (4) to the lower plate (2) so as to allow a relative rotation of the second movable plate (4) with respect to the lower plate (2) around a horizontal roll axis (Y) orthogonal to said horizontal tilt axis (X);
- a first roll adjustment knob (M4) and a second roll adjustment knob (M5) arranged under the lower plate (2) and provided with stems passing through the lower plate (2) and pushing the second movable plate (4) on either side with respect to the second joint (8b) so as to adjust a rotation of the second movable plate (4) about the horizontal roll axis (Y).

2. The adjustment system (100) according to claim 1, wherein the first joint (8a) is equal to the second joint (8b) and each joint (8a, 8b) comprises a central body (80) and two tangs (81, 82) disposed at the ends of the central body and rotatable with respect to the central body; the central body (80) of the first joint has the shape of a rod having an axis coincident with the tilt axis (X); the central body (80) of the second joint has the shape of a rod having an axis coincident with the roll axis (Y); the tangs (81, 82) rotate around the axis of the central body (80); the central body (80) of the first joint (8a) is fixed to the first movable plate (3), and the tangs (81, 82) of the first joint (8a) are fixed to the second movable plate (4); the central body (80) of the second joint (8b) is fixed to the lower plate (2), and the tangs (81, 82) of the second joint (8b) are fixed to the second movable plate (4).

3. The adjustment system (100) according to claim 2, wherein the central body (80) of the first joint (8a) is arranged above the second movable plate (4) along a first diagonal of the second movable plate; and the central body (80) of the second joint (8b) is arranged under the second movable plate (4) along a second diagonal of the second movable plate.

4. The adjustment system (100) according to any one of the preceding claims, wherein said adjustment assembly (R) comprises a pan adjustment mechanism (7) actuated by said pan adjustment knob (M1) to rotate the first movable plate (3); said pan adjustment mechanism (7) comprising:
- a support (70) mounted on the upper plate (1) and having a threaded hole (71) with horizontal axis wherein a stem (72) of the pan adjustment knob (M1) is screwed, and
- driving means (73) actuated by the stem (72) of the pan adjustment knob (M1) and connected to the first movable plate (3) to rotate it.

5. The adjustment system (100) according to claim 4, wherein said adjustment assembly (R) comprises a flange (5) disposed above the upper plate (1) and a counter flange (50) disposed under the upper plate (1) and attached to the first movable plate (3); and the driving means (73) of the pan adjustment mechanism (7) comprise a bushing (74) having an axial hole (75) with horizontal axis, wherein the stem (72) of the first adjustment knob is engaged, and a radial hole (76) wherein a pin (77) with vertical axis peripherally connected to the flange (5) is engaged.

6. The adjustment system (100) according to any one of the preceding claims, wherein said adjustment assembly (R) comprises rotation locking means (C) to lock the first movable plate (3) in position after the pan adjustment has been made.

7. The adjustment system (100) according to claim 6 when dependent on claim 5, wherein said rotation locking means (C) comprise a pair of knobs (C1, C2) mounted on the flange (5) for locking the flange (5) to the upper plate (1); the flange (5) having slots (59, 58) wherein the stems of the knobs (C1, C2) of the rotation locking means are engaged.

8. The adjustment system (100) according to any one of the preceding claims, wherein said support assembly (200) comprises a fixing plate (201) suitable for being fixed to the structure (S) and a bracket assembly (202) protruding from the fixing plate (201); the bracket assembly (202) comprising two tubes or bars (203) provided with a guiding groove (204) to enable a sliding of the adjustment assembly (R) on the bracket assembly (202), in the direction of the horizontal roll axis (Y), so as to adjust the distance of the projector (P) from the structure (S).

9. The adjustment system (100) according to claim 8, wherein the upper plate (1) of the adjustment assembly is slidably mounted on the bracket assembly (202); wherein locking means (B) lock the upper plate (1) of the adjustment assembly in position on the bracket assembly (202) of the support assembly; said locking means (B) comprising a first pair of locking knobs (B1, B2) and a second pair of locking knobs (B3, B4) mounted above the upper plate (1) of the adjustment assembly, respectively near opposite sides of the upper plate, to lock the upper plate in position on the bracket assembly.

10. The adjustment system (100) according to any one of the preceding claims, further comprising a plate assembly (300) for attaching the lower plate (2) of the adjustment assembly to the projector (P); the plate assembly (300) comprising an adjustment plate (301) attached to the lower plate (2) and a support plate (302) suitable for being attached to the projector (P); the adjustment plate (301) having a plurality of slots (310); wherein locking knobs (B5, B6, B7, B8) mounted above the adjustment plate (301) are provided with stems passing through the slots (310) of the adjustment plate (301) and engaging in tangs (320) of the support plate.

## Patentansprüche

1. Einstellvorrichtung (100) für einen Projektor, umfassend:
- eine Trägeranordnung (200), die dazu bestimmt ist, an einer Struktur (S) befestigt zu werden, und
- eine Einstellanordnung (R), die mit der Trägeranordnung (200) verbunden ist und dazu bestimmt ist, an einem Projektor (P) befestigt zu werden;
wobei die Einstellanordnung (R) umfasst:
- eine obere Platte (1), die dazu bestimmt ist, an der Trägeranordnung (200) befestigt zu werden,
- eine untere Platte (2), die dazu bestimmt ist, an dem Projektor (P) befestigt zu werden,
- eine erste bewegliche Platte (3), die unterhalb der oberen Platte (1) montiert ist und in Bezug auf die obere Platte (1) beweglich ist; wobei die erste bewegliche Platte (3) in Bezug auf die obere Platte (1) drehbar montiert ist, so dass sie sich um eine vertikale Schwenkachse (Z) drehen kann, um den Schwenk des Projektors einzustellen,
- eine zweite bewegliche Platte (4), die zwischen der unteren Platte (2) und der ersten beweglichen Platte (3) montiert ist und sowohl in Bezug auf die untere Platte (2) als auch in Bezug auf die erste bewegliche Platte (3) beweglich ist,
- einen Schwenkeinstellknopf (M1), der oberhalb der oberen Platte (1) montiert ist, um eine Drehung der ersten beweglichen Platte (3) um die vertikale Schwenkachse (Z) einzustellen,
- ein erstes Verbindungsstück (8a), das die erste bewegliche Platte (3) mit der zweiten beweglichen Platte (4) verbindet, so dass eine relative Drehung der zweiten beweglichen Platte (4) in Bezug auf die erste bewegliche Platte (3) um eine horizontale Kippachse (X) erlaubt wird,
- einen ersten Kippeinstellknopf (M2) und einen zweiten Kippeinstellknopf (M3), die oberhalb der oberen Platte (1) angeordnet sind und Stifte aufweisen, die die obere Platte (1) durchqueren und von beiden Seiten in Bezug auf das erste Verbindungsstück (8a) auf die zweite bewegliche Platte (4) drücken, um eine Drehung der zweiten beweglichen Platte (4) um die horizontale Kippachse (X) einzustellen,
- ein zweites Verbindungsstück (8b), das die zweite bewegliche Platte (4) mit der unteren Platte (2) so verbindet, dass eine relative Drehung der zweiten beweglichen Platte (4) in Bezug auf eine untere Platte (2) um eine horizontale Rollachse (Y) erlaubt wird, die rechtwinklig zur horizontalen Kippachse (X) steht;
- einen ersten Rolleinstellknopf (M4) und einen zweiten Rolleinstellknopf (M5), die unterhalb der unteren Platte (2) angeordnet sind und Stifte aufweisen, die die untere Platte (2) durchqueren und von beiden Seiten in Bezug auf das zweite Verbindungsstück (8b) auf die zweite bewegliche Platte (4) drücken, um eine Drehung der zweiten beweglichen Platte (4) um die horizontale Rollachse (Y) zu einzustellen.

2. Einstellvorrichtung (100) nach Anspruch 1, wobei das erste Verbindungsstück (8a) gleich dem zweiten Verbindungsstück (8b) ist und jedes Verbindungsstück (8a, 8b) einen zentralen Körper (80) und zwei Schäfte (81, 82) umfasst, die an den Enden des zentralen Körpers angeordnet sind und in Bezug auf den zentralen Körper drehbar sind; der zentrale Körper (80) des ersten Verbindungsstücks hat die Form einer Stange mit einer Achse, die mit der Kippachse (X) zusammenfällt; der zentrale Körper (80) des zweiten Verbindungsstücks hat die Form einer Stange mit einer Achse, die mit der Rollachse (Y) zusammenfällt; die Schäfte (81, 82) drehen sich um die Achse des zentralen Körpers (80); der zentrale Körper (80) des ersten Verbindungsstücks (8a) ist an der ersten beweglichen Platte (3) befestigt und die Schäfte (81, 82) des ersten Verbindungsstücks (8a) sind ist an der zweiten beweglichen Platte (4) befestigt; der zentrale Körper (80) des zweiten Verbindungsstücks (8b) ist an der unteren Platte (2) befestigt und die Schäfte (81, 82) des zweiten Verbindungsstücks (8b) sind an der zweiten beweglichen Platte (4) befestigt.

3. Einstellvorrichtung (100) nach Anspruch 2, wobei der zentrale Körper (80) des ersten Verbindungsstücks (8a) oberhalb der zweiten beweglichen Platte (4) entlang einer ersten Diagonale der zweiten beweglichen Platte angeordnet ist; und der zentrale Körper (80) des zweiten Verbindungsstücks (8b) unterhalb der zweiten beweglichen Platte (4) auf einer zweiten Diagonale der zweiten beweglichen Platte angeordnet ist.

4. Einstellvorrichtung (100) nach einem der vorstehenden Ansprüche, wobei die Einstellanordnung (R) einen Schwenkeinstellmechanismus (7) umfasst, der durch den Schwenkeinstellknopf (M1) betätigt wird, um die erste bewegliche Platte (3) zu drehen; wobei der Schwenkeinstellmechanismus (7) umfasst:
- einen Träger (70), der auf der oberen Platte (1) montiert ist und ein Gewindeloch (71) mit horizontaler Achse aufweist, in das ein Stift (72) des Schwenkeinstellknopfes (M1) sich einschraubt, und
- Antriebsmittel (73), die durch den Stift (72) des Schwenkeinstellknopfes (M1) betätigt werden und mit der ersten beweglichen Platte (3) verbunden sind, um sie zu drehen.

5. Einstellvorrichtung (100) nach Anspruch 4, wobei die Einstellanordnung (R) einen oberhalb der oberen Platte (1) angeordneten Flansch (5) und einen unterhalb der oberen Platte (1) angeordneten und an der ersten beweglichen Platte (3) befestigten Gegenflansch (50) umfasst; und die Antriebsmittel (73) des Schwenkeinstellmechanismus (7) eine Buchse (74) umfassen, die ein axiales Loch (75) mit horizontaler Achse aufweist, das von dem Stift (72) des ersten Einstellknopfes in Eingriff genommen wird, und ein radiales Loch (76), das von einem peripher mit dem Flansch (5) verbundenen Stift (77) mit vertikaler Achse in Eingriff genommen wird.

6. Einstellvorrichtung (100) nach einem der vorstehenden Ansprüche, wobei die Einstellanordnung (R) Drehungsblockiermittel (C) umfasst, um die erste bewegliche Platte (3) in Position zu blockieren, nachdem die Schwenkeinstellung vorgenommen wurde.

7. Einstellvorrichtung (100) nach Anspruch 6, sofern abhängig von Anspruch 5, wobei Drehungsblockiermittel (C) ein Paar von Knöpfen (C1, C2) umfassen, die auf dem Flansch (5) montiert sind, um den Flansch (5) an der oberen Platte (1) zu blockieren; wobei der Flansch (5) Langlöcher (59, 58) aufweist, die von den Stiften der Knöpfe (C1, C2) der Drehungsblockiermittel in Eingriff genommen werden.

8. Einstellvorrichtung (100) nach einem der vorstehenden Ansprüche, wobei die Trägeranordnung (200) eine Befestigungsplatte (201) umfasst, die dazu bestimmt ist, an der Struktur (S) befestigt zu werden, und eine Halterungsanordnung (202), die aus der Befestigungsplatte (201) vorsteht; wobei die Halterungsanordnung (202) zwei Rohre oder Stäbe (203) umfasst, die mit einer Führungsschiene (204) versehen sind, um ein Gleiten der Einstellanordnung (R) auf der Halterungsanordnung (202) in Richtung der horizontalen Rollachse (Y) zu erlauben, so dass der Abstand des Projektors (P) von der Struktur (S) eingestellt wird.

9. Einstellvorrichtung (100) nach Anspruch 8, wobei die obere Platte (1) der Einstellanordnung gleitbeweglich auf der Halterungsanordnung (202) montiert ist; wobei die Blockiermittel (B) die obere Platte (1) der Einstellanordnung auf der Halterungsanordnung (202) der Trägeranordnung in Position blockieren; wobei die Blockiermittel (B) ein erstes Paar von Blockierknöpfen (B1, B2) und ein zweites Paar von Blockierknöpfen (B3, B4) umfassen, die oberhalb der oberen Platte (1) der Einstellanordnung jeweils in der Nähe gegenüberliegender Seiten der oberen Platte montiert sind, um die obere Platte auf der Halterungsanordnung in Position zu blockieren.

10. Einstellvorrichtung (100) nach einem der vorstehenden Ansprüche, umfassend ferner eine Plattenanordnung (300) zum Befestigen der unteren Platte (2) der Einstellanordnung am Projektor (P); wobei die Plattenanordnung (300) eine Einstellplatte (301), die an der unteren Platte (2) befestigt ist, und eine Trägerplatte (302) umfasst, die dazu bestimmt ist, am Projektor (P) befestigt zu werden; wobei die Einstellplatte (301) eine Vielzahl von Langlöchern (310) aufweist; wobei die Blockierknöpfe (B5, B6, B7, B8), die oberhalb der Einstellplatte (301) montiert sind, mit Stiften versehen sind, die die Langlöcher (310) der Einstellplatte (301) durchqueren und die Schäfte (320) der Trägerplatte in Eingriff nehmen.

## Revendications

1. Système de réglage (100) pour projecteur comprenant :
- un ensemble de support (200) destiné à être fixé à une structure (S), et
- un ensemble de réglage (R) relié à l'ensemble de support (200) et destiné à être fixé à un projecteur (P) ;
ledit ensemble de réglage (R) comprenant :
- une plaque supérieure (1) destinée à être fixée à l'ensemble de support (200),
- une plaque inférieure (2) destinée à être fixée au projecteur (P),
- une première plaque mobile (3) montée au-dessous de la plaque supérieure (1) et mobile par rapport à la plaque supérieure (1) ; où la première plaque mobile (3) est montée pivotante par rapport à la plaque supérieure (1), de manière à tourner autour d'un axe vertical de rotation de panoramique (Z) pour régler le panoramique du projecteur,
- une seconde plaque mobile (4) montée entre la plaque inférieure (2) et la première plaque mobile (3) et mobile tant par rapport à la plaque inférieure (2) que par rapport à la première plaque mobile (3),
- une molette de réglage de panoramique (M1) montée au-dessus de la plaque supérieure (1), pour régler une rotation de la première plaque (3) autour de l'axe vertical de rotation de panoramique (Z),
- un premier joint (8a) qui relie la première plaque mobile (3) à la seconde plaque mobile (4) de manière à permettre une rotation relative de la seconde plaque mobile (4) par rapport à la première plaque mobile (3) autour d'un axe horizontal d'inclinaison (X),
- une première molette de réglage de l'inclinaison (M2) et une seconde molette de réglage de l'inclinaison (M3) disposées au-dessus de la plaque supérieure (1) et ayant des tiges qui traversent la plaque supérieure (1) et qui agissent en poussant sur la seconde plaque mobile (4) d'une part et de l'autre par rapport au premier joint (8a), pour régler une rotation de la seconde plaque mobile (4) autour de l'axe horizontal d'inclinaison (X),
- un second joint (8b) qui relie la seconde plaque mobile (4) à la plaque inférieure (2) de manière à permettre une rotation relative de la seconde plaque mobile (4) par rapport à la plaque inférieure (2) autour d'un axe horizontal de roulement (Y), orthogonal au susdit axe horizontal d'inclinaison (X) ;
- une première molette de réglage du roulement (M4) et une seconde molette de réglage du roulement (M5) disposées sous la plaque inférieure (2) et ayant des tiges qui traversent la plaque inférieure (2) et qui agissent en poussant sur la seconde plaque mobile (4) d'une part et de l'autre par rapport au second joint (8b), pour régler une rotation de la seconde plaque mobile (4) autour de l'axe horizontal de roulement (Y).

2. Système de réglage (100) selon la revendication 1, où le premier joint (8a) est identique au second joint (8b) et chaque joint (8a, 8b) comprend un corps central (80) et deux appendices (81, 82) disposées à l'extrémité du corps central et pivotantes par rapport au corps central ; le corps central (80) du premier joint a la forme d'une tige ayant un axe coïncidant avec l'axe d'inclinaison (X) ; le corps central (80) du second joint a la forme d'une tige ayant un axe coïncidant avec l'axe de roulement (Y) ; les appendices (81, 82) sont en mesure de tourner autour de l'axe du corps central (80) ; le corps central (80) du premier joint (8a) est fixé à la première plaque mobile (3) et les appendices (81, 82) du premier joint (8a) sont fixées sur la seconde plaque mobile (4) ; le corps central (80) du second joint (8b) est fixé à la plaque inférieure (2) et les appendices (81, 82) du second joint (8b) sont fixées sur la seconde plaque mobile (4).

3. Système de réglage (100) selon la revendication 2, où le corps central (80) du premier joint (8a) se dispose au-dessus de la seconde plaque mobile (4) le long d'une première diagonale de la seconde plaque mobile ; et le corps central (80) du second joint (8b) se dispose au-dessous de la seconde plaque mobile (4) le long d'une diagonale de la seconde plaque mobile.

4. Système de réglage (100) selon l'une quelconque des revendications précédentes, où ledit ensemble de réglage (R) comprend un mécanisme de réglage de panoramique (7) sur lequel ladite molette de réglage de panoramique (M1) agit pour faire tourner la première plaque mobile (3) ; ledit mécanisme de réglage de panoramique (7) comprenant :
- un support (70) monté sur la plaque supérieure (1) et doté d'un orifice fileté (71) ayant axe horizontal dans lequel une tige (72) de la molette de réglage de panoramique (M1) se visse, et
- des moyens de transmission (73) activés par la tige (72) de la molette de réglage de panoramique (M1) et reliés à la première plaque mobile (3) pour la faire tourner.

5. Système de réglage (100) selon la revendication 4, où ledit ensemble de réglage (R) comprend une bride (5) disposée au-dessus de la plaque supérieure (1) et une contre-bride (50) disposée au-dessous de la plaque supérieure (1) et fixée à la première plaque mobile (3) ; et les moyens de transmission (73) du mécanisme de réglage de panoramique (7) comprennent une douille (74) ayant un orifice axial (75), avec axe horizontal, dans lequel s'engage la tige (72) de la première molette de réglage et un orifice radial (76) dans lequel s'engage un pivot (77) avec axe vertical relié à insertion périphérique à la bride5).

6. Système de réglage (100) selon l'une quelconque des revendications précédentes, où ledit ensemble de réglage (R) comprend des moyens de blocage de la rotation (C) qui bloquent en position la première plaque mobile (3), après avoir effectué le réglage de panoramique.

7. Système de réglage (100) selon la revendication 6 quand dépendante de la revendication 5, où lesdits moyens de blocage de la rotation (C) comprennent une paire de molettes (C1, C2) montées sur la bride (5) pour bloquer la bride (5) à la plaque supérieure (1) ; la bride (5) étant dotée de fentes (59, 58) dans lesquelles s'engagent les tiges des molettes (C1, C2) des moyens de blocage de la rotation.

8. Système de réglage (100) selon l'une quelconque des revendications précédentes, où ledit ensemble de support (200) comprend une plaque de fixation (201) destinée à être fixée à la structure (S) et un groupe de brides (202) qui fait saillie de la plaque de fixation (201) ; le groupe de brides (202) comprenant deux tubes ou barres (203) dotés d'une rainure de guide (204) afin que l'ensemble de réglage (R) puisse glisser sur le groupe de brides (202), dans la direction de l'axe horizontal de roulement (Y), pour régler la distance du projecteur (P) par rapport à la structure (S).

9. Système de réglage (100) selon la revendication 8, où la plaque supérieure (1) de l'ensemble de réglage est montée coulissante sur le groupe de brides (202) ; où les moyens de blocage (B) bloquent en position la plaque supérieure (1) de l'ensemble de réglage sur le groupe de brides (202) de l'ensemble de support ; lesdits moyens de blocage (B) comprenant une première paire de molettes de blocage (B1, B2) et une seconde paire de molettes de blocage (B3, B4) montées au-dessus de la plaque supérieure (1) de l'ensemble de réglage respectivement à proximité des côtés opposés de la plaque supérieure, pour bloquer en position la plaque supérieure sur le groupe de brides.

10. Système de réglage (100) selon l'une quelconque des revendications précédentes, comprenant également un groupe de plaques (300) pour fixer la plaque inférieure (2) de l'ensemble de réglage sur le projecteur (P) ; le groupe de plaques (300) comprenant une plaque de réglage (301) fixée sur la plaque inférieure (2) et une plaque de support (302) destinée à être fixée sur le projecteur (P) ; la plaque de réglage (301) ayant une pluralité de fentes (310) ; où les molettes de blocage (B5, B6, B7, B8), montées au-dessus de la plaque de réglage (301), ont des tiges qui traversent les fentes (310) de la plaque de réglage (301) et s'engagent dans des languettes (320) de la plaque de support.
